# EUROPÄISCHE PATENTANMELDUNG

(11) **EP 4 067 405 A1**
(43) Veröffentlichungstag der Anmeldung: **05.10.2022**
(21) Anmeldenummer: 21166715.9
(22) Anmeldetag: 01.04.2021
(51) Int. Cl.: C08G 59/40

(54) **HITZEHÄRTENDE EPOXIDHARZZUSAMMENSETZUNG GEEIGNET FÜR VORHÄRTUNGSVERFAHREN OHNE ZUSÄTZLICHE METALLVERBINDUNGSTECHNIKEN**

(71) Anmelder: Sika Technology AG, 6340 Baar (CH)
(72) Erfinder: Paripovic, Dusko, 8049 Zürich (CH); Gallo, Dominique, 8106 Adlikon bei Regensdorf (CH); Voci, Antonio, 8050 Zürich (CH)
(74) Vertreter: Sika Patent Attorneys

(57) **Zusammenfassung**

Die vorliegende Erfindung betrifft hitzehärtende Epoxidharzzusammensetzungen enthaltend als Härter eine Mischung von aromatischem Dicarbonsäuredihydrazid mit einem Dihydrazid ausgewählt aus der Gruppe bestehend aus Glutarsäuredihydrazid, Adipinsäuredihydrazid, Pimelinsäuredihydrazid, 8,12-Eicosadiendioicacid-1,20-dihydrazid und 4-Isopropyl-2,5-dioxoimidazolidin-1,3-di(propionohydrazid). Die Epoxidharzzusammensetzungen eignen sich insbesondere für Verklebungen im Rohbau, wo nach einer Induktionsvorhärtungen ohne zusätzliche Metallverbindungstechniken die vorgehärteten Klebstoffe in einem weiteren Schritt bei Temperaturen von ca. 180 °C ausgehärtet werden.

## Beschreibung

### Technisches Gebiet

Die Erfindung betrifft das Gebiet der hitzehärtenden einkomponentigen Epoxidharzzusammensetzungen, insbesondere für den Einsatz als Rohbauklebstoff.

### Stand der Technik

Ein wichtiges Einsatzgebiet von hitzehärtenden einkomponentigen Epoxidharzzusammensetzungen findet sich im Fahrzeugbau, insbesondere beim Verkleben im Rohbau. Nach der Applikation der Epoxidharzzusammensetzung wird die Karosserie im KTL-(Kathodische Tauchlackierung)-Ofen erhitzt, wodurch auch die hitzehärtende einkomponentige Epoxidharzzusammensetzung ausgehärtet wird. Heutzutage werden die erwähnten Epoxidklebstoffe ausschließlich in Kombination mit anderen Metallverbindungstechniken wie Schweißen und Nieten verwendet, da die verklebten Bauteile vor der Aushärtung keine mechanischen Belastung, beispielsweise beim Transport zum KTL-Ofen, aushalten würden. Eine teilweise Aushärtung der applizierten Epoxidklebstoffe vor dem KTL-Ofen, beispielsweise mittels Induktionserhitzung, wäre eine schnelle und kostengünstige Alternative zu den erwähnten aufwändigen thermischen und mechanischen Metallverbindungstechniken. Solche Teil-Aushärtungen haben jedoch den Nachteil, dass typischerweise nur ein begrenzter Energieeintrag in die Epoxidklebstoffe möglich ist, die Aushärtung zu wenig fortschreitet und eine geringe mechanische Festigkeit erhalten wird. Insbesondere bei den hohen Temperaturen von 180 °C im KTL-Ofen versagt die Haftung herkömmlicher teilausgehärteter Epoxidklebstoffe ohne zusätzliche Metallverbindungstechniken, bevor die finale Aushärtung erreicht wird.

### Darstellung der Erfindung

Aufgabe der vorliegenden Erfindung ist es daher, hitzehärtende einkomponentige Epoxidharzzusammensetzungen zur Verfügung zu stellen, welche ohne zusätzliche Metallverbindungstechniken nach einer Vorhärtung, insbesondere 60 Sekunden bei 180 - 200 °C, vorzugsweise 180 °C, bei einer weiteren Erhitzung auf 180 °C eine ausreichende Haftung aufweist.

Diese Aufgabe konnte überraschenderweise durch eine hitzehärtende einkomponentige Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, verwenden.

### Wege zur Ausführung der Erfindung

Die vorliegende Erfindung betrifft hitzehärtende einkomponentige Epoxidharzzusammensetzungen, umfassend:
a) mindestens ein Epoxidharz **A** mit durchschnittlich mehr als einer Epoxidgruppe pro Molekül;
b) mindestens einen Härter **B1** für Epoxidharze, wobei es sich bei dem Härter **B1** um ein aromatisches Dicarbonsäuredihydrazid, insbesondere Isophthalsäuredihydrazid und/oder Terephthalsäuredihydrazid, bevorzugt Isophthalsäuredihydrazid, handelt; und
c) mindestens einen Härter **B2** für Epoxidharze, wobei es sich bei dem Härter **B2** um ein Dihydrazid ausgewählt aus der Gruppe bestehend aus Glutarsäuredihydrazid, Adipinsäuredihydrazid, Pimelinsäuredihydrazid, 8,12-Eicosadiendioicacid-1,20-dihydrazid und 4-Isopropyl-2,5-dioxoim-idazolidin-1,3-di(propionohydrazid), insbesondere Adipinsäuredihydrazid, handelt.
Das Gewichtsverhältnis von Härter **B1** zu Härter **B2 (B1/B2)** beträgt von 0.15 -20.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist. Demzufolge wird ein Amin, welches eine primäre Aminogruppe aufweist, als "primäres Amin" bezeichnet, ein solches mit einer sekundären Aminogruppe wird entsprechend als "sekundäres Amin" und ein solches mit einer tertiären Aminogruppe als "tertiäres Amin" bezeichnet.

Als "Raumtemperatur" wird im vorliegenden Dokument eine Temperatur von 23°C bezeichnet.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

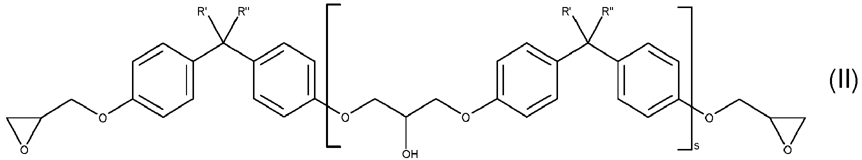

Hierbei stehen die Substituenten R' und R" unabhängig voneinander entweder für H oder CH₃.

Bei Epoxid-Festharzen steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite^{®} GY 250, Araldite^{®} PY 304, Araldite^{®} GY 282 (Huntsman) oder D.E.R.^{™} 331 oder D.E.R.^{™} 330 (Dow) oder Epikote 828 (Hexion) erhältlich.

Weiterhin geeignet als Epoxidharz **A** sind sogenannte Epoxid-Novolake. Diese weisen insbesondere die folgende Formel auf: 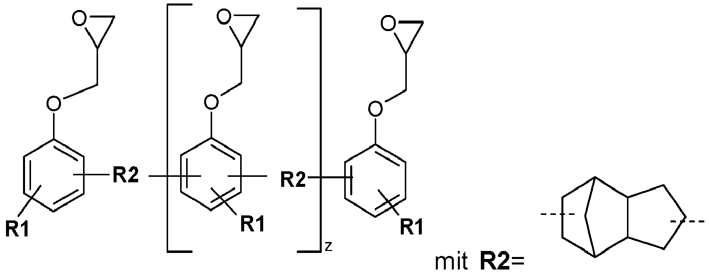 oder CH₂, **R1** = H oder Methyl und z = 0 bis 7.

Insbesondere handelt es sich hierbei um Phenol- oder Kresol-Epoxid-Novolake **(R2** = CH₂).

Solche Epoxidharze sind unter dem Handelnamen EPN oder ECN sowie Tactix^{®} von Huntsman oder unter der Produktereihe D.E.N.^{™} von Dow Chemical kommerziell erhältlich.

Bevorzugt stellt das Epoxidharz **A** ein Epoxidharz der Formel (II) dar, insbesondere ein Epoxid-Flüssigharz der Formel (II) dar.

In einer besonders bevorzugten Ausführungsform enthält die hitzehärtende einkomponentige Epoxidharzzusammensetzung sowohl mindestens ein Epoxid-Flüssigharz der Formel (II) mit s < 1, insbesondere kleiner als 0.2, als auch mindestens ein Epoxid-Festharz der Formel (II) mit s > 1.5, insbesondere von 2 bis 12.

Der Anteil von Epoxidharzes **A** beträgt vorzugsweise 10 - 60 Gew.-%, insbesondere 30 - 60 Gew.-%, insbesondere 40 - 55 Gew.-%, bezogen auf das Gesamtgewicht der Epoxidharzzusammensetzung.

Weiter ist es vorteilhaft, wenn es sich bei 50-100 Gew.-%, insbesondere 80-100 Gew.-%, des Epoxidharzes **A** um ein vorgenanntes Epoxid-Flüssigharz handelt.

Weiter ist es vorteilhaft, wenn es sich bei 0-30 Gew.-%, insbesondere 0-20 Gew.-%, besonders bevorzugt 5-15 Gew.-%, des Epoxidharzes **A** um ein vorgenanntes Epoxid-Festharz handelt.

Die erfindungsgemässe Zusammensetzung enthält weiterhin mindestens einen Härter **B1** für Epoxidharze, wobei es sich bei dem Härter **B1** um ein aromatisches Dicarbonsäuredihydrazid handelt. Insbesondere handelt es sich dabei um Isophthalsäuredihydrazid und/oder Terephthalsäuredihydrazid, bevorzugt handelt es sich um Isophthalsäuredihydrazid.

Geeignete Dihydrazide sind beispielsweise kommerziell von Otsuka Chemical Co., Ltd unter dem Handelsnamen Ajicure^{®} (von Ajinomoto Fine-TechnoCo., Inc.) und unter dem Handelsnamen Technicure^{®} (von A&C Catalysts) erhältlich.

Die erfindungsgemässe Zusammensetzung enthält weiterhin mindestens einen Härter **B2** für Epoxidharze, wobei es sich bei dem Härter **B2** um ein Dihydrazid ausgewählt aus der Gruppe bestehend aus Glutarsäuredihydrazid, Adipinsäuredihydrazid, Pimelinsäuredihydrazid, 8,12-Eicosadiendioicacid-1,20-dihydrazid (UDH) und 4-Isopropyl-2,5-dioxoimidazolidin-1,3-di(propionohydrazid) (VDH).

Vorzugsweise handelt es sich um Adipinsäuredihydrazid, 8,12-Eicosadiendioicacid-1,20-dihydrazid (UDH) und 4-Isopropyl-2,5-dioxoimidazolidin-1,3-di(propionohydrazid) (VDH). Am meisten bevorzugt handelt es sich um Adipinsäuredihydrazid.

Geeignete Dihydrazide sind beispielsweise kommerziell von Otsuka Chemical Co., Ltd unter dem Handelsnamen Ajicure^{®} (von Ajinomoto Fine-TechnoCo., Inc.) und unter dem Handelsnamen Technicure^{®} (von A&C Catalysts) erhältlich.

Überraschenderweise wurde gefunden, dass andere aromatische Härter für Epoxidharze als Härter **B1,** alleine oder in Kombination mit Härter **B2,** nicht zu ausreichend hohen Werten bei ZSF bei Induktionsvorhärtung bei 200 °C, insbesondere 180 °C, führen. Dies ist beispielsweise ersichtlich in Tabelle 1 und Tabelle 2 beim Vergleich von R3 und R4 mit E1-E5.

Das Gewichtsverhältnis von Härter **B1** zu Härter **B2 (B1/B2)** beträgt von 0.15-20.

Beträgt das Gewichtsverhältnis weniger als 0.15 ist dies dahingehend von Nachteil, dass dabei tiefe Werte für die ZSF bei Induktionsvorhärtung bei 180 °C, respektive 200 °C, erhalten werden. Weiter werden tiefe Werte in ZF, E-modul, ZSF und Tg bei Ofenhärtung erhalten. Dies ist beispielsweise ersichtlich in Tabelle 1 und Tabelle 2 beim Vergleich von R2 mit E5.

Beträgt das Gewichtsverhältnis mehr als 20 ist dies dahingehend von Nachteil, dass dabei tiefe Werte für die ZSF bei Induktionsvorhärtung bei 180 °C erhalten werden. Weiter werden tiefe Werte in IP bei 23° C und -30 °C bei Ofenhärtung erhalten. Dies ist beispielsweise ersichtlich in Tabelle 1 und Tabelle 2 beim Vergleich von R5 mit E1.

Besonders bevorzugt beträgt das Gewichtsverhältnis von Härter **B1** zu Härter **B2 (B1/B2)** 0.3-15, vorzugsweise 0.4-10, insbesondere 0.8-8, insbesondere 1.1-6, insbesondere 2-5, insbesondere bevorzugt 3-4. Dies ist dahingehend vor Vorteil, dass dabei hohe Werte bei ZSF bei Induktionsvorhärtung bei 200 °C, insbesondere 180 °C, erhalten werden. Weiter werden dabei hohe Werte bei ZF und E-modul bei Ofenhärtung erreicht.

Es kann weiter vorteilhaft sein, wenn das Gewichtsverhältnis von Härter **B1** zu Härter **B2 (B1/B2)** 0.3-15, vorzugsweise 0.4-10, insbesondere 0.5-5, insbesondere 0.6-3, insbesondere 0.7-2, insbesondere 0.8-1.5, insbesondere bevorzugt 0.9-1.3, beträgt. Dies ist dahingehend von Vorteil, dass dadurch hohe Werte bei ZSF bei Ofenhärtung erhalten werden.

Auch kann es vorteilhaft sein, wenn das Gewichtsverhältnis von Härter **B1** zu Härter **B2 (B1/B2)** 0.15-8, vorzugsweise 0.2-4, insbesondere 0.25-2, insbesondere 0.3-1.5, insbesondere 0.35-1, insbesondere 0.35-0.8, insbesondere bevorzugt 0.35-0.6, beträgt. Dadurch werden hohe Werte für IP bei Ofenhärtung erhalten.

Das Verhältnis des Anteils Epoxidgruppen des Epoxidharz **A** in mol / Summe von Härter **B1** und Härter **B2** in mol **(A/(B1+B2)),** beträgt vorzugsweise 3 - 5, insbesondere 3.5 - 4.5. Dies ist dahingehend von Vorteil, dass in diesem Bereich besonders vorteilhafte Werte für die mechanischen Eigenschaften, der Zugscherfestigkeit, des Tg, und des Impact Peel der ausgehärteten Zusammensetzung sowie der Zugscherfestigkeit der vorgehärteten Zusammensetzung erhalten werden.

Weiter kann es vorteilhaft sein, wenn mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der hitzehärtenden einkomponentigen Epoxidharzzusammensetzung, der vorhandenen Hydrazidgruppen aufweisenden Moleküle von den Härtern **B1** und **B2** stammen.

Weiter ist es vorteilhaft, wenn die hitzehärtende einkomponentige Epoxidharzzusammensetzung möglichst wenig Dicyandiamid aufweist. Falls die Epoxidharzzusammensetzung Dicyandiamid aufweist beträgt das Gewichtsverhältnis von der Summe von Härter **B1** und Härter **B2** zu Dicyandiamid ((**B1+B2**)/Dicyandiamid) ≥ 0.5, ≥ 0.75, ≥ 1, ≥ 2, ≥ 5, insbesondere ≥ 10, vorzugsweise ≥ 50, besonders bevorzugt ≥ 100.

Vorzugsweise beträgt die Menge an Dicyandiamid weniger als 5 Gew.-%, weniger als 3 Gew.-%, weniger als 2 Gew.-%, insbesondere weniger als 1 Gew.-%, bevorzugt weniger als 0.5 Gew.-%, besonders bevorzugt weniger als 0.3 Gew.-%, am meisten bevorzugt weniger als 0.1 Gew.-%, bezogen auf das Gesamtgewicht der Epoxidharzzusammensetzung. Besonders bevorzugt weist die hitzehärtende einkomponentige Epoxidharzzusammensetzung kein Dicyandiamid auf.

Vorzugsweise enthält die hitzehärtende einkomponentige Epoxidharzzusammensetzung zusätzlich mindestens einen Beschleuniger **C** für Epoxidharze.

Vorzugsweise ist der Beschleuniger **C** für Epoxidharze ausgewählt aus der Liste bestehend aus substituierten Harnstoffen, Imidazolen, Imidazolinen und blockierten Aminen, insbesondere substituierten Harnstoffen.

Vorzugsweise handelt es sich um substituierte Harnstoffe der Formel (I) 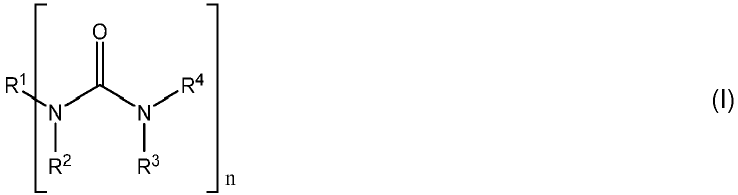 worin R¹ und R² unabhängig voneinander Wasserstoffatome oder einwertige Alkylradikale mit 1 bis 10 Kohlenstoffatomen darstellen, die ferner gegebenenfalls Sauerstoffatome, Stickstoffatome und / oder aromatische Einheiten umfassen oder zusammen ein zweiwertiges Alkylradikal mit 1 bis 10 Kohlenstoffatomen bilden und die darüber hinaus gegebenenfalls Sauerstoffatome, Stickstoffatome oder aromatische Einheiten umfassen; R³ und R⁴ stellen unabhängig voneinander Wasserstoffatome oder einwertige Alkylradikale mit 1 bis 10 Kohlenstoffatomen dar, die ferner gegebenenfalls Sauerstoffatome oder Stickstoffatome umfassen; und der Index n hat einen Wert von 1 oder 2.

Vorzugsweise ist der substituierte Harnstoff der Formel (I) ausgewählt aus der Gruppe bestehend aus p-Chlorphenyl-N, N-dimethylharnstoff (Monuron), 3-Phenyl-1,1-dimethylharnstoff (Fenuron), 3,4-Dichlorphenyl-N, N-dimethiyharnstoff (Diuron), N-Methylharnstoff, N, N-Dimethylharnstoff, N, N'-Dimethyl Harnstoff, N, N, N'-Trimethylharnstoff, N, N, N', N'-Tetramethylharnstoff und Derivate davon, wobei einige oder alle Methylgruppen stattdessen Ethylgruppen sind.

Vorzugsweise stellen R¹ und R² unabhängig voneinander Wasserstoffatome oder einwertige lineare oder verzweigte Alkylradikale mit 1 bis 10, vorzugsweise 1 bis 5, bevorzugter 1 bis 4 Kohlenstoffatomen dar, die gegebenenfalls zusammen ein zweiwertiges Alkylradikal darstellen, das mit dem benachbarten Stickstoffatom eine Ringstruktur bildet und / oder R³ und R⁴ repräsentieren unabhängig voneinander Wasserstoffatome oder einwertige lineare oder verzweigte Alkylreste mit 1 bis 10, vorzugsweise 1 bis 5, bevorzugter 1 bis 4 Kohlenstoffatomen, die gegebenenfalls zusammen ein zweiwertiges Alkylradikal darstellen, das eine Ringstruktur mit dem benachbarten Stickstoffatom bildet.

Ganz besonders bevorzugte substituierte Harnstoffe der Formel (I) sind solche, bei denen R¹ und R² in Formel (I) beide Wasserstoffatome darstellen und / oder bei denen R³ und R⁴ beide Ethyl- oder Methylgruppen, vorzugsweise Methylgruppen, darstellen.

Weitere bevorzugte Harnstoffderivate der Formel (I) umfassen solche, bei denen R¹, R², R³ und R⁴ in Formel (I) alle Ethyl oder Methyl, vorzugsweise Methylgruppen, darstellen oder bei denen R¹, R² und R³ Ethyl oder Methyl, vorzugsweise Methyl, darstellen und R⁴ ein Wasserstoffatom ist, oder wobei R¹ und R⁴ beide Wasserstoffatome darstellen und R² und R³ beide Ethyl- oder Methylgruppen, vorzugsweise Methylgruppen, darstellen.

Geeignete Harnstoffderivate sind beispielsweise unter dem Handelsnamen Dyhard^{®} (von AlzChem Group AG), unter dem Handelsnamen Omicure^{®} (von CVC Thermoset Specialties), unter dem Handelsnamen Amicure^{®} (von Evonik) und bei Sigma Aldrich im Handel erhältlich.

Der Beschleuniger **C** weist insbesondere ein Molekül von weniger als 1000 g/mol, insbesondere zwischen 80 und 800 g/mol auf. Ist das Molekulargewicht grösser ist die Beschleunigungswirkung reduziert und die notwendige Einsatzmenge ist bedeutend höher, was wiederum zu schlechter Mechanik führen kann.

Die Menge des Beschleunigers **C** beträgt vorteilhaft 0.01 - 6.0 Gew.-%, insbesondere 0.02 - 4.0 Gew.-%, bevorzugt 0.02 - 2.0 Gew.-%, bezogen auf das Gewicht des Epoxidharzes **A.**

Das Verhältnis des Anteils Beschleuniger **C** in Gramm pro mol Epoxidgruppen des Epoxidharz **A** beträgt vorzugsweise von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen.

Dies ist dahingehend von Vorteil, dass dadurch höhere Werte für die ZSF bei der bei Induktionsvorhärtung und bei der Ofenhärtung höhere Werte für die mechanischen Eigenschaften, die ZSF und den IP erhalten werden. Dies ist beispielsweise ersichtlich in Tabelle 1 und Tabelle 2 beim Vergleich von E2 mit E3.

Die einkomponentige hitzehärtende Epoxidharzzusammensetzung enthält vorzugsweise mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus endständig blockierten Polyurethanpolymeren **D1,** Flüssigkautschuken **D2** und Core-Shell-Polymeren **D3.** Bevorzugt ist der Zähigkeitsverbesserer **D** ausgewählt ist aus der Gruppe bestehend aus endständig blockierten Polyurethanpolymeren **D1** und Flüssigkautschuken **D2.** Besonders bevorzugt handelt es sich um ein endständig blockiertes Polyurethanpolymer **D1.**

Handelt es sich bei dem Zähigkeitsverbesserer **D** um ein endständig blockiertes Polyurethanpolymer **D1.**

Vorzugsweise handelt es sich um ein endständig blockiertes Polyurethanpolymer **D1** blockiert mit einer Blockierungsgruppe, welche sich bei einer Temperatur über 100°C abspaltet.

Als Blockierungsgruppe bevorzugt sind insbesondere einerseits Phenole oder Bisphenole zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Die Herstellung des endständig blockierten Polyurethanprepolymers erfolgt aus einem Isocyanatgruppen terminierten linearen oder verzweigten Polyurethanprepolymer mit einer oder mehreren Isocyanat-reaktiven Verbindungen. Falls mehrere derartige Isocyanat-reaktive Verbindungen eingesetzt werden, kann die Reaktion sequentiell oder mit einer Mischung dieser Verbindungen erfolgen.

Die Umsetzung erfolgt bevorzugt so, dass die eine oder die mehreren Isocyanat-reaktiven Verbindungen stöchiometrisch oder im stöchiometrischen Überschuss eingesetzt werden, um zu gewährleisten, dass alle NCO-Gruppen umgesetzt sind.

Das Polyurethanprepolymer mit Isocyanat-Endgruppen, lässt sich aus mindestens einem Diisocyanat oder Triisocyanat sowie aus einem Polymeren **Q_{PM}** mit endständigen Amino-, Thiol- oder Hydroxylgruppen und/oder aus einem, gegebenenfalls substituierten, Polyphenol **Q_{PP}** herstellen.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate. Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCOreaktiver Gruppen auf.

Als Polymere **Q_{PM}** bevorzugt sind Polyole mit mittleren Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypoly-alkylenglykole mit C₂-C₆-Alkylengruppen oder mit gemischten C₂-C₆-Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

In einer bevorzugten Ausführungsform wird das Polyurethanprepolymer aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

Das Polyurethanprepolymer mit Isocyanatendgruppen weist bevorzugt elastischen Charakter auf. Es zeigt bevorzugt eine Glasumwandlungstemperatur Tg von kleiner als 0°C.

Bei dem Zähigkeitsverbesserer D kann es sich um einen Flüssigkautschuk **D2** handeln. Hierbei kann es sich z.B. um ein carboxyl- oder epoxidterminiertes Polymer handeln.

In einer ersten Ausführungsform kann dieser Flüssigkautschuk ein carboxyl- oder epoxidterminiertes Acrylnitril/Butadien-Copolymer oder ein Derivat davon sein. Derartige Flüssigkautschuke sind z.B. unter dem Namen Hypro / Hypox^{®} CTBN und CTBNX und ETBN von Emerald Perfomance Materials, kommerziell erhältlich. Als Derivate sind insbesondere Epoxidgruppen aufweisende Elastomer-modifizierte Prepolymere, wie sie unter der Produktlinie Polydis^{®}, insbesondere aus der Produktelinie Polydis^{®} 36.., von der Firma Struktol^{®} (Schill+Seilacher Gruppe, Deutschland) oder unter der Produktlinie Albipox (Evonik, Deutschland) kommerziell vertrieben werden, geeignet.

In einer zweiten Ausführungsform kann dieser Flüssigkautschuk ein Polyacrylatflüssigkautschuk sein, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow erhältlich.

Es können natürlich auch Mischungen von Flüssigkautschuken verwendet werden, insbesondere Mischungen von carboxyl- oder epoxidterminierten Acrylnitril/Butadien-Copolymeren oder von Derivaten davon.

Der Zähigkeitsverbesserer **D** kann in einer dritten Ausführungsform ein Core-Shell Polymer **D3** sein. Core-Shell-Polymere bestehen aus einem elastischen Kernpolymer und einem starren Schalen-Polymer. Besonders geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength^{™} von Arkema, Paraloid^{™} von Dow oder F-351 ^{™} von Zeon erhältlich sind.

Vorzugsweise beträgt der Anteil an Zähigkeitsverbesserer **D,** insbesondere an endständig blockiertem Polyurethanpolymer **D1,** 15-45 Gew.-%, insbesondere 20-40 Gew.-%, insbesondere 22.5-35 Gew.-%, insbesondere 25-35 Gew.-%, besonders bevorzugt 27.5-32.5 Gew.-%, bezogen auf das Gesamtgewicht der hitzehärtenden einkomponentigen Epoxidharzzusammensetzung.

Dies ist dahingehend von Vorteil, dass dadurch hohe Werte für IP bei gleichzeig hohen Werten für ZF, E-modul und ZSF erhalten werden.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Besonders bevorzugt handelt es sich um Füllstoffe ausgewählt aus der Gruppe bestehend aus Calciumcarbonat, Calciumoxid und pyrogene Kieselsäuren.

Vorteilhaft beträgt der Gesamtanteil des gesamten Füllstoffs **F** 5 - 40 Gewichts-%, vorzugsweise 10 - 30 Gewichts-%, bezogen auf das Gesamtgewicht der hitzehärtenden einkomponentigen Epoxidharzzusammensetzung.

In einer weiteren bevorzugten Ausführungsform enthält die Zusammensetzung zusätzlich mindestens einen Epoxidgruppen-tragenden Reaktivverdünner **G.** Solche Reaktivverdünner sind dem Fachmann bekannt. Bevorzugte Beispiele für Epoxidgruppen-tragende Reaktivverdünner sind:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der hitzehärtenden einkomponentigen Epoxidharzzusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll^{®} bzw. Dellatol BBS von Bayer kommerziell erhältlich sind.

Als Stabilisatoren eignen sich insbesondere gegebenenfalls substituierte Phenole, wie BHT oder Wingstay^{®} T (Elikem), sterisch gehinderte Amine oder N-Oxylverbindungen wie TEMPO (Evonik).

Eine besonders bevorzugte einkomponentige Epoxidharzzusammensetzung umfasst:
- 10 - 60 Gew.-%, insbesondere 30 - 60 Gew.-%, bezogen auf das Gesamtgewicht der Epoxidharzzusammensetzung, Epoxidharz **A** mit durchschnittlich mehr als einer Epoxidgruppe pro Molekül; vorzugsweise handelt es sich bei 50-100 Gew.-%, insbesondere 80-100 Gew.-%, des Epoxidharzes **A** um ein Epoxid-Flüssigharz und bei 0-30 Gew.-%, insbesondere 0-20 Gew.-%, des Epoxidharzes **A** um ein Epoxid-Festharz;.
- mindestens einen Härter **B1** für Epoxidharze, wobei es sich bei dem Härter **B1** um ein aromatisches Dicarbonsäuredihydrazid, insbesondere Isophthalsäuredihydrazid und/oder Terephthalsäuredihydrazid, bevorzugt Isophthalsäuredihydrazid, handelt;
- mindestens einen Härter **B2** für Epoxidharze, wobei es sich bei dem Härter **B2** um ein Dihydrazid ausgewählt aus der Gruppe bestehend aus Glutarsäuredihydrazid, Adipinsäuredihydrazid, Pimelinsäuredihydrazid, 8,12-Eicosadiendioicacid-1,20-dihydrazid und 4-Isopropyl-2,5-dioxoim-idazolidin-1,3-di(propionohydrazid), insbesondere Adipinsäuredihydrazid, 8,12-Eicosadiendioicacid-1,20-dihydrazid und 4-Isopropyl-2,5-dioxoimidazolidin-1,3-di(propionohydrazid), am meisten bevorzugt Adipinsäuredihydrazid, handelt;
- vorzugsweise 0.01 - 6.0 Gew.-%, insbesondere 0.02 - 4.0 Gew.-%, bevorzugt 0.02 - 2.0 Gew.-%, bezogen auf das Gewicht des Epoxidharzes **A,** von mindestens einem Beschleuniger **C** für Epoxidharze ausgewählt aus der Liste bestehend aus substituierten Harnstoffen, Imidazolen, Imidazolinen und blockierten Aminen, insbesondere substituierten Harnstoffen:
   - vorzugsweise 15-45 Gew.-%, insbesondere 20-40 Gew.-%, insbesondere 22.5-35 Gew.-%, insbesondere 25-35 Gew.-%, besonders bevorzugt 27.5-32.5 Gew.-%, bezogen auf das Gesamtgewicht der hitzehärtenden einkomponentigen Epoxidharzzusammensetzung, von mindestens einem Zähigkeitsverbesserer **D,** ausgewählt ist aus der Gruppe bestehend aus endständig blockierten Polyurethanpolymeren **D1,** Flüssigkautschuken **D2** und Core-Shell-Polymeren **D3,** vorzugsweise endständig blockierten Polyurethanpolymeren **D1:**
      - vorzugsweise 5 - 40 Gewichts-%, vorzugsweise 10 - 30 Gewichts-%, bezogen auf das Gesamtgewicht der hitzehärtenden einkomponentigen Epoxidharzzusammensetzung, von einem Füllstoffe **F** ausgewählt aus der Gruppe bestehend aus Calciumcarbonat, Calciumoxid und pyrogene Kieselsäuren;
      - vorzugsweise 0.1 - 15 Gewichts-%, vorzugsweise 0.1 - 5 Gewichts-%, insbesondere bevorzugt 0.1 - 2 Gewichts-%, besonders bevorzugt 0.2 - 1 Gewichts-%, bezogen auf das Gesamtgewicht der hitzehärtenden einkomponentigen Epoxidharzzusammensetzung, von einen Epoxidgruppen-tragenden Reaktivverdünner **G.**

Das Gewichtsverhältnis von Härter **B1** zu Härter **B2 (B1/B2)** beträgt von 0.15 - 20, vorzugsweise 0.3-15, vorzugsweise 0.4-10, insbesondere 0.8-8, insbesondere 1.1-6, insbesondere 2-5, insbesondere bevorzugt 3-4.

Das Verhältnis des Anteils Epoxidgruppen des Epoxidharz **A** in mol / Summe von Härter **B1** und Härter **B2** in mol **(A/(B1+B2)),** beträgt vorzugsweise 3 - 5, insbesondere 3.5 - 4.5.

Das Verhältnis des Anteils Beschleuniger **C** in Gramm pro mol Epoxidgruppen des Epoxidharz **A** beträgt vorzugsweise von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen.

Weiter kann es vorteilhaft sein, wenn die bevorzugte einkomponentige Epoxidharzzusammensetzung zu mehr als 80 Gewichts-%, vorzugsweise mehr als 90 Gewichts-%, insbesondere mehr als 95 Gewichts-%, insbesondere bevorzugt mehr als 98 Gewichts-%, am meisten bevorzugt mehr als 99 Gewichts-%, bezogen auf das Gesamtgewicht der Epoxidharzzusammensetzung, aus den vorgenannten Bestandteilen besteht.

Beispiele von besonders bevorzugten Zusammensetzungen sind E2 und E7, insbesondere E7, in Tabelle 1.

Es ist vorteilhaft, wenn die erfindungsgemässe Epoxidharzzusammensetzung eine Viskosität bei 25°C von 500 - 3500 Pa*s, insbesondere 1000 - 3000 Pa*s, vorzugsweise 1500 - 2500 Pa*s, besonders bevorzugt 2000 - 2500 Pa*s, aufweist, insbesondere gemessen mit einem Rheometer oszillatorisch unter Verwendung einer Platten-Platten Geometrie mit folgenden Parametern: 5 Hz, 1 mm Messspalt, Platte-Platte-Durchmesser 25 mm, 1% Deformation. Dies ist dahingehend von Vorteil, dass dadurch eine gute Applizierbarkeit gewährleistet ist.

Es hat sich gezeigt, dass sich die beschriebenen hitzehärtenden einkomponentigen Epoxidharzzusammensetzungen besonders zur Verwendung als einkomponentige hitzehärtende Klebstoffe, insbesondere als hitzehärtender einkomponentiger Rohbauklebstoff im Fahrzeugbau, eignen. Ein derartiger einkomponentiger Klebstoff weist breite Einsatzmöglichkeiten auf. Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden einkomponentigen Zusammensetzung ist es möglich, ohne zusätzliche Metallverbindungstechniken nach einer Vorhärtung, insbesondere 30 - 60 Sekunden bei 180 - 200 °C, vorzugsweise 180 °C, bei einer weiteren Erhitzung auf 180 °C eine ausreichende Haftung der verklebten Substrate zu gewährleisten.

Ein solcher Klebstoff wird insbesondere in Anwendungen verwendet, welche keine Metallverbindungstechniken, insbesondere thermische und mechanische Metallverbindungstechniken, besonders bevorzugt Schweißen und Nieten, verwenden. Vorzugsweise enthalten diese Anwendungen zuerst eine Vorhärtung des Klebstoffs, insbesondere 60 Sekunden bei 180 - 200 °C, vorzugsweise 180 °C, sowie nachfolgend, insbesondere nach einer Abkühlung des vorgehärteten Klebstoffs auf unter 60 °C, eine weitere Erhitzung auf mindestens 160 °C, insbesondere mindestens 180 °C, und anschliessender vollständiger Aushärtung des Klebstoffs.

Ein solcher Klebstoff wird insbesondere zuerst mit den zu verklebenden Materialien bei einer Temperatur von zwischen 10°C und 80°C, insbesondere zwischen 10°C und 60°C, kontaktiert, danach vorgehärtet später ausgehärtet, wie vorgehend beschrieben.

Ein weiterer Aspekt der vorliegenden Erfindung betrifft ein Verfahren zur Verklebung von hitzestabilen Substraten, welches die Schritte umfasst:
i) Applizieren einer hitzehärtenden einkomponentigen Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden einkomponentigen Epoxidharzzusammensetzung mit der Oberfläche eines weiteren hitzestabilen Substrates **S2,** insbesondere eines Metalls;
iii) Erhitzen der Zusammensetzung auf eine Temperatur von 160 - 220°C, insbesondere von 170 - 200°C, bevorzugt von 175 - 190°C, für 10 - 120 Sekunden, insbesondere von 20 - 80 Sekunden, bevorzugt von 30 - 60 Sekunden.
iv) Erhitzen der Zusammensetzung auf eine Temperatur von 100 - 220°C, insbesondere von 120 - 200°C, bevorzugt zwischen 140 und 190°C, besonders bevorzugt zwischen 150 und 180°C; wobei zwischen Schritt iii) und Schritt iv) die Zusammensetzung eine Temperatur von weniger als 100 °C, insbesondere weniger als 60°C, bevorzugt 50 - 20°C, erreicht. Vorzugsweise liegt zwischen Schritt iii) und Schritt iv) eine Zeitspanne von mehr als 15 Minuten, insbesondere mehr als 20 Minuten, bevorzugt ≥ als 30 Minuten, insbesondere 30 bis 300 Minuten.

Das Substrat **S2** besteht hierbei aus dem gleichen oder einem unterschiedlichen Material wie das Substrat **S1.** Die Substrate **S1** und/oder **S2** sind insbesondere die vorgängig erwähnten Metalle und Kunststoffe.

Vorzugsweise handelt es sich bei dem Erhitzen in Schritt iii) um eine Erhitzung mittels Induktion.

Vorzugsweise wird in dem Schritt iv) Erhitzen der Zusammensetzung auf eine Temperatur von 100 - 220°C, insbesondere von 120 - 200°C, bevorzugt zwischen 140 und 190°C, besonders bevorzugt zwischen 150 und 180°C, die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Einen weiteren Aspekt der vorliegenden Erfindung betrifft daher ein verklebter Artikel erhalten aus dem vorgenannten Verfahren. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden einkomponentigen Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

Einen weiteren Aspekt der vorliegenden Erfindung betrifft eine ausgehärtete Epoxidharzzusammensetzung, wie sie durch Erhitzen einer hitzehärtenden einkomponentigen Epoxidharzzusammensetzung wie sie vorgängig im Detail beschrieben wurde, erhalten wird.

Besonders bevorzugt weisen die erfindungsgemässen Zusammensetzungen folgende Eigenschaften auf:
Nach einer Vorhärtung für 35 Sekunden bei 180 °C:
   ZSF, gemessen wie im experimentellen Teil beschrieben bei einer Temperatur von180 °C, von > 2.3 MPa, insbesondere ≥ 2.4 MPa, insbesondere ≥ 2.6 MPa, insbesondere ≥ 2.9 MPa, besonders bevorzugt ≥ 3 MPa.
   und/oder
Nach einer Aushärtung für 40 Minuten bei 180 °C:
   ZF, gemessen wie im experimentellen Teil beschrieben, von ≥ 30 MPa, insbesondere ≥ 35 MPa, insbesondere ≥ 40 MPa;
   BD, gemessen wie im experimentellen Teil beschrieben, von 5 - 20 %;
   E-modul, gemessen wie im experimentellen Teil beschrieben, von ≥ 1000 MPa, insbesondere ≥ 1250 MPa, insbesondere ≥ 1500 MPa, besonders bevorzugt ≥ 1750 MPa;
   Tg, gemessen wie im experimentellen Teil beschrieben, von ≥ 130 °C, insbesondere ≥ 140 °C, insbesondere ≥ 150 °C, besonders bevorzugt ≥ 160 °C;
   ZSF, gemessen wie im experimentellen Teil beschrieben, von ≥ 30 MPa, insbesondere ≥ 31 MPa, insbesondere ≥ 32 MPa, besonders bevorzugt ≥ 33 MPa;
   IP bei 23 °C, gemessen wie im experimentellen Teil beschrieben, von ≥ 16 N/mm, insbesondere ≥ 18 N/mm, insbesondere ≥ 20 N/mm, besonders bevorzugt ≥ 22 N/mm;
   IP bei -30 °C, gemessen wie im experimentellen Teil beschrieben, von ≥ 7 N/mm, insbesondere ≥ 10 N/mm, besonders bevorzugt ≥ 15 N/mm.

### Beispiele

Im Folgenden werden einige Beispiele aufgeführt, welche die Erfindung weiter veranschaulichen, den Umfang der Erfindung aber in keiner Weise beschränken sollen.

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet.

| | |
|---|---|
| A-Harz flüssig | Epoxid-Flüssigharz, D.E.R. 331 (Bisphenol-A-diglycidylether), Dow |
| RD | Reaktivverdünner, Hexandiol-glycidylether, Denacol EX-212, Nagase America |
| ADH | Adipinsäuredihydrazid, Technicure ADH-J, A&C Catalysts Inc. |
| IDH | Isophthalsäuredihydrazid, Technicure IDH-J, A&C Catalysts Inc. |
| DDS | 3,3' Diaminodiphenylsulfon, Aradur-9719-1, Huntsman |
| C1 | N,N-Dimethylharnstoff (=1,1-Dimethylharnstoff), n = 1, R¹ = H, R² = R³= CH₃, Sigma-Aldrich, Schweiz |
| Dicy | Dicyandiamid, Dyhard 100SF, AlzChem |
| Füllstoff | Gemisch aus Calciumcarbonat, Calciumoxid, pyrogene Kieselsäure |
| | Poly-THF 2000 (Difunktionelles Polybutylenglykol) (OH-Equivalentgewicht = ca. 1000 g/OH-Equivalent), BASF |
| | Liquiflex H (Hydroxylterminertes Polybutadien) (OH-Equivalentgewicht = ca. 1230 g/OH-Equivalent), Krahn |
| | Isophoron-diisocyanat (= *"IPDI*"), Evonik |
| | Cardolite NC-700 (Cardanol, meta-substituiertes Alkenyl-mono-Phenol), Cardolite |

Eingesetzte Rohstoffe.

### Herstellung der Zusammensetzungen

Es wurden gemäss Angaben in der Tabelle 1 die Referenzzusammensetzungen R1 - R5 sowie die erfindungsgemässen Zusammensetzungen E1 bis E8 hergestellt. Die Mengenangaben in der Tabelle 1 sind in Gewichtsteilen.

Das Verhältnis des Anteils Epoxidgruppen des Epoxidharz **A** in mol / Summe von Härter **B1** und Härter **B2** in mol (**A/(B1+B2**)) wird in der Tabelle 1 "DH-Index" genannt und in [mol EP-Gruppen / mol **(B1+B2)**] angegeben.

Das Verhältnis des Anteils Beschleuniger **C** in Gramm pro mol Epoxidgruppen des Epoxidharz **A** wird in der Tabelle 1 "C-Index" genannt und in [g Beschleuniger / mol EP-Gruppen] angegeben.

Das Gewichtsverhältnis von Härter **B1** zu Härter **B2** wird in der Tabelle 1 als **"(B1/B2)"** ausgewiesen.

### Prüfmethoden:

### Zugfestigkeit. Bruchdehnung und E-Modul (DIN EN ISO 527)

Eine Klebstoffprobe wurde zwischen zwei Teflonpapieren auf eine Schichtdicke von 2mm verpresst. Nach 40 min Aushärtung bei 180°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit (ZF), Bruchdehnung und das E-Modul 0,05-0,25%, wurden gemäss DIN EN ISO 527 bei einer Temperatur von 23 °C bestimmt.

### Zugscherfestigkeit (ZSF) (DIN EN 1465), Aushärtung IV (induktive Vorhärtung), Tmax 180°C / 200°C

Gereinigte und mit Anticorit PL 3802-39S rückbeölte Prüfbleche von Stahl Elo H420 (Dicke 1,5mm) wurden auf einer Klebfläche von 25 x 10mm mit Glaskugeln als Abstandshalter in einer Schichtdicke von 0,3 mm mit dem Klebstoff verklebt. Danach werden die Proben mittels Induktion (Laborinduktionsanlage EW2, Hersteller IFF GmbH Deutschland) innerhalb von 10 Sekunden auf eine Temperatur von 180 °C, respektive 200 °C, geheizt und für 35 Sekunden bei einer Temperatur von 180 °C, respektive 200 °C, belassen. Danach wurden die Proben mittels Pressluft innerhalb von 10 Sekunden auf eine Temperatur von 150°C gebracht und danach liess man die Proben auf 23 °C abkühlen.

Die Zugscherfestigkeit wurde auf einer Zugmaschine bei einer Zuggeschwindigkeit von 10mm/min in einer 3-fach Bestimmung gemäss DIN EN 1465 bei einer Temperatur von 23 °C ("ZSF @ 23°C [MPa]"), respektive bei einer Temperatur von 180 °C ("ZSF @ 180°C [MPa]"), bestimmt.

### Zugscherfestigkeit (ZSF) (DIN EN 1465), Aushärtung OH (Ofenhärtung) (40min/180°C)

Gereinigte und mit Anticorit PL 3802-39S rückbeölte Prüfbleche von Stahl Elo H420 (Dicke 1,5mm) wurden auf einer Klebfläche von 25 x 10mm mit Glaskugeln als Abstandshalter in einer Schichtdicke von 0,3 mm mit dem Klebstoff verklebt und für 10 min bei 140°C Ofentemperatur ausgehärtet.

Die Zugscherfestigkeit wurde auf einer Zugmaschine bei einer Zuggeschwindigkeit von 10mm/min in einer 3-fach Bestimmung gemäss DIN EN 1465 bei einer Temperatur von 23 °C bestimmt.

### Schlagschälfestigkeit/Impact peel (IP 23°C/-30 °C) (gemäss ISO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden für 10 min bei 140°C Ofentemperatur ausgehärtet. Die Messung der Schlagschälfestigkeit erfolgte bei 23°C, respektive bei -30°C, als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Viskosität

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C mit folgenden Parametern: 5 Hz, 1 mm Messspalt, Platte-Platte-Durchmesser 25 mm, 1% Deformation. Die gemessenen Zusammensetzungen R1 - R5 sowie E1 bis E8 wiesen alle eine Viskosität von 1500 - 2500 Pa*s auf.

**Tabelle 1**

| | **R1** | **R2** | **R3** | **R4** | **R5** | **E1** | **E2** | **E3** | **E4** | **E5** | **E6** | **E2** | **E7** | **E8** |
|---|---|---|---|---|---|---|---|---|---|---|---|---|---|---|
| A-Harz flüssig | 52.2 | 48.3 | 46.0 | 46.6 | 47.6 | 47.7 | 47.8 | 47.9 | 47.9 | 48.1 | 51.6 | 47.8 | 43.9 | 35.9 |
| RD | 0.9 | 0.9 | 0.8 | 0.9 | 0.9 | 0.9 | 0.9 | 0.9 | 0.9 | 0.9 | 0.9 | 0.9 | 0.9 | 0.9 |
| D1 | 23.9 | 22.1 | 21.1 | 21.4 | 21.9 | 21.9 | 21.9 | 21.9 | 22.0 | 22.1 | 17.3 | 21.9 | 26.6 | 36.3 |
| Dicy | 4.4 | | | | | | | | | | | | | |
| IDH | | | | | 12.68 | 11.42 | 9.53 | 9.55 | 6.38 | 3.20 | 10.28 | 9.53 | 8.77 | 7.19 |
| ADH | | 11.52 | | 2.78 | | 1.14 | 2.85 | 2.86 | 5.72 | 8.61 | 3.08 | 2.85 | 2.63 | 2.15 |
| DDS | | | 15.65 | 11.88 | | | | | | | | | | |
| C1 | 0.23 | 0.21 | 0.2 | 0.21 | 0.21 | 0.21 | 0.21 | - | 0.21 | 0.21 | 0.23 | 0.21 | 0.2 | 0.15 |
| Füllstoffe | 18.37 | 16.97 | 16.25 | 16.23 | 16.71 | 16.73 | 16.81 | 16.89 | 16.89 | 16.88 | 16.61 | 16.81 | 17 | 17.41 |
| Summe: | 100 | 100 | 100 | 100 | 100 | 100 | 100 | 100 | 100 | 100 | 100 | 100 | 100 | 100 |
| (B1/B2) | | | | | | 10.0 | 3.3 | 3.3 | 1.1 | 0.4 | 3.3 | 3.3 | 3.3 | 3.3 |
| DH-Index | 5.5 | 4 | 4 | 4 | 4 | 4 | 4 | 4 | 4 | 4 | 4 | 4 | 4 | 4 |
| C-Index | 0.8 | 0.8 | 0.8 | 0.8 | 0.8 | 0.8 | 0.8 | - | 0.8 | 0.8 | 0.8 | 0.8 | 0.8 | 0.8 |

**Tabelle 2**

| | **R1** | **R2** | **R3** | **R4** | **R5** | **E1** | **E2** | **E3** | **E4** | **E5** | **E6** | **E2** | **E7** | **E8** |
|---|---|---|---|---|---|---|---|---|---|---|---|---|---|---|
| **IV, Tmax 180°C** | | | | | | | | | | | | | | |
| ZSF @ 23°C [MPa] | 8.60 | 26.40 | 0 | 3.90 | 22.40 | 27.50 | 26.50 | 9.40 | 24.70 | 24.80 | 27.70 | 26.50 | 23.60 | 15.60 |
| ZSF @ 180°C [MPa] | 1.60 | 2.43 | 0 | 0.18 | 4.47 | 3.80 | 3.80 | 3.00 | 2.46 | 2.70 | 3.30 | 3.80 | 2.84 | 2.33 |
| **IV, Tmax 200°C** | | | | | | | | | | | | | | |
| ZSF @ 23°C [MPa] | 0.00 | 10.80 | 0 | 2.30 | 0.70 | 6.87 | 14.10 | 2.32 | 16.20 | 16.30 | 17.20 | 14.10 | 13.20 | 4.35 |
| ZSF @ 180°C [MPa] | 0.00 | 2.30 | 0 | 0.40 | 0.00 | 2.92 | 3.19 | 2.69 | 2.92 | 2.44 | 3.56 | 3.19 | 3.00 | 2.33 |
| **OH (40min/180°C)** | | | | | | | | | | | | | | |
| ZF [MPa] | 30 | 34.20 | 30 | 36 | 46 | 45 | 43 | 21 | 37 | 38 | 47 | 43 | 34 | 24 |
| BD [%] | 10% | 6% | 7% | 8% | 6% | 6% | 6% | 4% | 6% | 6% | 5% | 6% | 8% | 18% |
| E-Modul [MPa] | 1330 | 1520 | 1480 | 1650 | 2061 | 1846 | 2054 | 1222 | 1697 | 1820 | 2144 | 2054 | 1487 | 860 |
| Tg DMTA [°C] | 118 | 124 | 121 | 121 | 151 | 150 | 145 | 165 | 138 | 130 | 150 | 145 | 142 | 131 |
| ZSF 23°C [MPa] | 32.8 | 33.8 | 29.5 | 32.7 | 32.20 | 31.60 | 33.20 | 26.70 | 33.70 | 32.50 | 32.90 | 33.20 | 31.00 | 25.30 |
| IP 23°C [N/mm] | 40.8 | 26.6 | 25.8 | 28.5 | 15.5 | 16.2 | 18.02 | 9.5 | 20.7 | 22.7 | 13.9 | 18.02 | 22.7 | 30.1 |
| IP -30°C [N/mm] | 33.6 | 17.4 | 13.3 | 12.6 | 5.2 | 6.8 | 8.7 | 7.2 | 12.4 | 15.3 | 4.4 | 8.7 | 15.1 | 31.3 |

## Patentansprüche

1. Hitzehärtende einkomponentige Epoxidharzzusammensetzung umfassend
a) mindestens ein Epoxidharz **A** mit durchschnittlich mehr als einer Epoxidgruppe pro Molekül;
b) mindestens einen Härter **B1** für Epoxidharze, wobei es sich bei dem Härter **B1** um ein aromatisches Dicarbonsäuredihydrazid, insbesondere Isophthalsäuredihydrazid und/oder Terephthalsäuredihydrazid, bevorzugt Isophthalsäuredihydrazid, handelt; und
c) mindestens einen Härter **B2** für Epoxidharze, wobei es sich bei dem Härter **B2** um ein Dihydrazid ausgewählt aus der Gruppe bestehend aus Glutarsäuredihydrazid, Adipinsäuredihydrazid, Pimelinsäuredihydrazid, 8,12-Eicosadiendioicacid-1,20-dihydrazid und 4-Isopropyl-2,5-dioxoimidazolidin-1,3-di(propionohydrazid), insbesondere Adipinsäuredihydrazid, handelt; und
wobei das Gewichtsverhältnis von Härter **B1** zu Härter **B2 (B1/B2)** von 0.15 - 20 beträgt.

2. Hitzehärtende einkomponentige Epoxidharzzusammensetzung gemäss Anspruch 1, **dadurch gekennzeichnet, dass** das Gewichtsverhältnis von Härter **B1** zu Härter **B2 (B1/B2)** von 0.3-15, vorzugsweise 0.4-10, insbesondere 0.8-8, insbesondere 1.1-6, insbesondere 2-5, insbesondere bevorzugt 3-4, beträgt.

3. Hitzehärtende einkomponentige Epoxidharzzusammensetzung gemäss einem der vorhergehenden Ansprüche, **dadurch gekennzeichnet, dass** das Verhältnis des Anteils Epoxidgruppen des Epoxidharz **A** in mol / Summe von Härter **B1** und Härter **B2** in mol **(A/(B1+B2))** 3 - 5, insbesondere 3.5 - 4.5, beträgt.

4. Hitzehärtende einkomponentige Epoxidharzzusammensetzung gemäss einem der vorhergehenden Ansprüche, **dadurch gekennzeichnet, dass** die hitzehärtende einkomponentige Epoxidharzzusammensetzung zusätzlich mindestens einen Beschleuniger **C** ausgewählt aus der Liste bestehend aus substituierten Harnstoffen, Imidazolen, Imidazolinen und blockierten Aminen, insbesondere substituierten Harnstoffen, aufweist.

5. Hitzehärtende einkomponentige Epoxidharzzusammensetzung gemäss Anspruch 4, **dadurch gekennzeichnet, dass** das Verhältnis des Anteils Beschleuniger **C** in Gramm pro mol Epoxidgruppen des Epoxidharz **A** von 0.01 - 0.5 g/mol Epoxidgruppen, insbesondere 0.05 - 0.3 g/mol Epoxidgruppen, besonders bevorzugt 0.075 - 0.2 g/mol Epoxidgruppen, am meisten bevorzugt 0.08 - 0.15 g/mol Epoxidgruppen, beträgt.

6. Hitzehärtende einkomponentige Epoxidharzzusammensetzung gemäss einem der vorhergehenden Ansprüche, **dadurch gekennzeichnet, dass** die hitzehärtende einkomponentige Epoxidharzzusammensetzung zusätzlich mindestens einen Zähigkeitsverbesserer **D** ausgewählt aus der Gruppe bestehend aus endständig blockierten Polyurethanpolymeren **D1,** Flüssigkautschuken **D2** und Core-Shell-Polymeren **D3** aufweist, vorzugsweise handelt es sich um endständig blockiertes Polyurethanpolymer **D1.**

7. Hitzehärtende einkomponentige Epoxidharzzusammensetzung gemäss Anspruch 6, **dadurch gekennzeichnet, dass** der Anteil des mindestens einen Zähigkeitsverbesserers **D,** insbesondere des endständig blockierten Polyurethanpolymers **D1,** 15-45 Gew.-%, insbesondere 20-40 Gew.-%, insbesondere 22.5-35 Gew.-%, insbesondere 25-35 Gew.-%, besonders bevorzugt 27.5-32.5 Gew.-%, bezogen auf das Gesamtgewicht der hitzehärtenden einkomponentigen Epoxidharzzusammensetzung, beträgt.

8. Hitzehärtende einkomponentige Epoxidharzzusammensetzung gemäss einem der vorhergehenden Ansprüche, **dadurch gekennzeichnet, dass** die hitzehärtende einkomponentige Epoxidharzzusammensetzung eine Viskosität bei 25°C von 500 - 3000 Pa*s, insbesondere 1000 - 2500 Pa*s, vorzugsweise 1000 - 2000 Pa*s, aufweist, insbesondere gemessen mit einem Rheometer oszillatorisch unter Verwendung einer Platten-Platten Geometrie mit folgenden Parametern: 5 Hz, 1 mm Messspalt, Platte-Platte-Durchmesser 25 mm, 1% Deformation.

9. Hitzehärtende einkomponentige Epoxidharzzusammensetzung gemäss einem der vorhergehenden Ansprüche, **dadurch gekennzeichnet, dass** der Anteil des Epoxidharzes **A** 10 - 60 Gew.-%, insbesondere 30 - 60 Gew.-%, insbesondere 40 - 55 Gew.-%, bezogen auf das Gesamtgewicht der hitzehärtenden einkomponentigen Epoxidharzzusammensetzung, beträgt.

10. Verwendung einer hitzehärtenden einkomponentigen Epoxidharzzusammensetzung gemäss einem der Ansprüche 1 bis 9 als einkomponentiger hitzehärtender Klebstoff, insbesondere als hitzehärtender einkomponentiger Rohbauklebstoff im Fahrzeugbau.

11. Verfahren zur Verklebung von hitzestabilen Substraten umfassend die Schritte
i) Applizieren einer hitzehärtenden einkomponentigen Epoxidharzzusammensetzung gemäss einem der Ansprüche 1 bis 9 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 160 - 220°C, insbesondere von 170 - 200°C, bevorzugt von 175 - 190°C, für 10 - 120 Sekunden, insbesondere von 20 - 80 Sekunden, bevorzugt von 30 - 60 Sekunden.
iv) Erhitzen der Zusammensetzung auf eine Temperatur von 100 - 220°C, insbesondere von 120 - 200°C, bevorzugt zwischen 140 und 190°C, besonders bevorzugt zwischen 150 und 180°C; wobei zwischen Schritt iii) und Schritt iv) die Zusammensetzung eine Temperatur von weniger als 100 °C, insbesondere weniger als 60°C, bevorzugt 50 - 20°C, erreicht;
wobei das Substrat **S2** aus dem gleichen oder einem unterschiedlichen Material wie das Substrat **S1** besteht.

12. Verfahren gemäss Anspruch 11, wobei zwischen Schritt iii) und Schritt iv) eine Zeitspanne von mehr als 15 Minuten, insbesondere mehr als 20 Minuten, bevorzugt ≥ als 30 Minuten, insbesondere 30 bis 300 Minuten, liegt.

13. Verfahren gemäss Anspruch 11 oder 12, wobei es sich bei dem Erhitzen in Schritt iii) um eine Erhitzung mittels Induktion handelt.

14. Verfahren gemäss Anspruch 11 bis 13, wobei in dem Schritt iv) Erhitzen der Zusammensetzung auf eine Temperatur von 100 - 220°C, insbesondere von 120 - 200°C, bevorzugt zwischen 140 und 190°C, besonders bevorzugt zwischen 150 und 180°C, die Zusammensetzung für 10 min - 6 h, 10 min - 2 h, 10 min - 60 min, 10 min - 30 min, 10 min - 20 min, besonders bevorzugt 10 min - 15 min, bei der vorgenannten Temperatur belassen wird.

15. Verklebter Artikel erhalten aus einem Verfahren gemäss einem der Ansprüche 11 bis 14.
